# EUROPEAN PATENT APPLICATION

(11) **EP 1 589 729 A2**
(43) Date of publication of application: **26.10.2005**
(21) Application number: 05008179.3
(22) Date of filing: 14.04.2005
(51) Int. Cl.: H04M 1/03

(54) **Portable device**

(30) Priority: 19.04.2004 JP 2004122865
(71) Applicant: NEC CORPORATION, Tokyo (JP)
(72) Inventor: Yamashita, Masayoshi, c/o NEC Saitama, Ltd., Kamikawamachi, Kodama-gun, Saitama (JP)
(74) Representative: Glawe, Delfs, Moll

(57) **Abstract**

A portable device including, a plurality of speakers which output a stereophonic sound or a surround sound. The plurality of speakers are separated into at least two groups of speaker, and the at least two groups of speaker are positioned apart from each other. In addition, the portable device further comprises an object which is positioned between the at least two groups of speakers.

## Description

### BACKGROUND

This Application claims priority from Japanese Pat. Appln. No. 122865/04 filed April 19, 2004, the contents of which are incorporated herein by reference.

### 1. Technical Field

This disclosure teaches a technique relating to a portable device which can provide higher quality of sound during the reproduction of music.

### 2. Description of the Related Art

Speakers are used in portable terminals such as a mobile phone, a PHS (Personal Handy phone System), and a PDA (Personal Data Assistance, Personal Data Assistants), for outputting an electronic sound for ringing.

Further, in many cases, portable terminals have a function of reproducing music and outputting the reproduced music via speakers.

Applications such as games on mobile terminals, achieve high quality by using a screen display on a liquid crystal display and speakers that output sounds relating to the applications.

In addition, portable terminals are equipped with two or more speakers that output a stereophonic sound or a surround sound for reproducing music, providing a higher quality of sound, for example, the ringing sound.

However, since portable terminals are small in size so as to be portable, speakers can be mounted only in limited portions of those portable terminals. For example, speakers are disposed on an opposite side of a portable terminal from a surface where a key button for manipulating the portable terminal is disposed. Accordingly, sounds are output from the speakers on the back side of the portable terminal, thus a high quality surround effect or a high quality stereophonic effect can not be achieved for music that is used in operating applications such as games.

In addition, due to the small size of the portable terminal, speakers can not be disposed on the portable terminal sufficiently apart from each other, providing an insufficient stereophonic effect or surround sound effect for outputting sounds.

Related art does not provide a portable device with good quality sound production.

### BRIEF SUMMARY

The stereophonic effect or surround sound effect can be improved by putting an object, such as a finger of the user of the portable terminal, between at least two speakers. Such a device has not been proposed in related art.

This disclosure teaches techniques for solving the problem described above and by providing a portable device which has a structure that enhances stereophonic or surround sound effects.

According to the technique disclosed, a portable device comprises, a plurality of speakers which output a stereophonic sound or a surround sound. The plurality of speakers are separated into at least two groups of speaker, and the at least two groups of speakers are positioned apart from each other. In addition, the portable device further comprises an object which is positioned between the at least two groups of speaker.

### BRIEF DESCRIPTION OF THE DRAWINGS

These and other features, aspects, and advantages of the present technique will become better understood with reference to the following description, amended claims, and accompanying drawings, which should not be read to limit the invention in any way, in which:

Fig. 1 illustrates an external appearance of a mobile phone according to an exemplary embodiment.

Fig. 2 illustrates a configuration of a main part of the portable phone according to the exemplary embodiment.

Fig. 3 illustrates a music output section of the portable phone according to the exemplary embodiment.

Fig. 4 illustrates an operation for generating stereophonic sounds and surround sounds in the portable phone of the exemplary embodiment.

### DETAILED DESCRIPTION

According to the technique disclosed, a portable device comprises a plurality of speakers. The speakers output surround sound or stereophonic sound. In addition, the speakers are divided into at least two groups. The groups of speakers are disposed on the portable device apart from each other. Furthermore, an object is disposed between the at least two groups of speakers. Accordingly, the object can act as a shield among the groups of speakers, thereby increasing a difference in phases and/or amplitudes of sounds from the speakers. This enhances a surround effect or a stereophonic effect recognized by a user of the portable device.

Exemplary embodiments of the technique are described below with reference to the attached figures. The exemplary embodiments are intended to assist in the understanding of the technique and are not intended to limit the scope of the invention in any way.

In a portable terminal having the function of reproducing music as stereophonic sound and/or surround sound, a plurality of speakers separated into two groups are disposed on both sides on the same body surface of the portable terminal. In addition a portion where the user is likely to place a finger when using the mobile terminal is interposed between the two groups of speakers. Furthermore, the terminal is driven so as to output stereophonic sound or surround sound through the two groups of speakers.

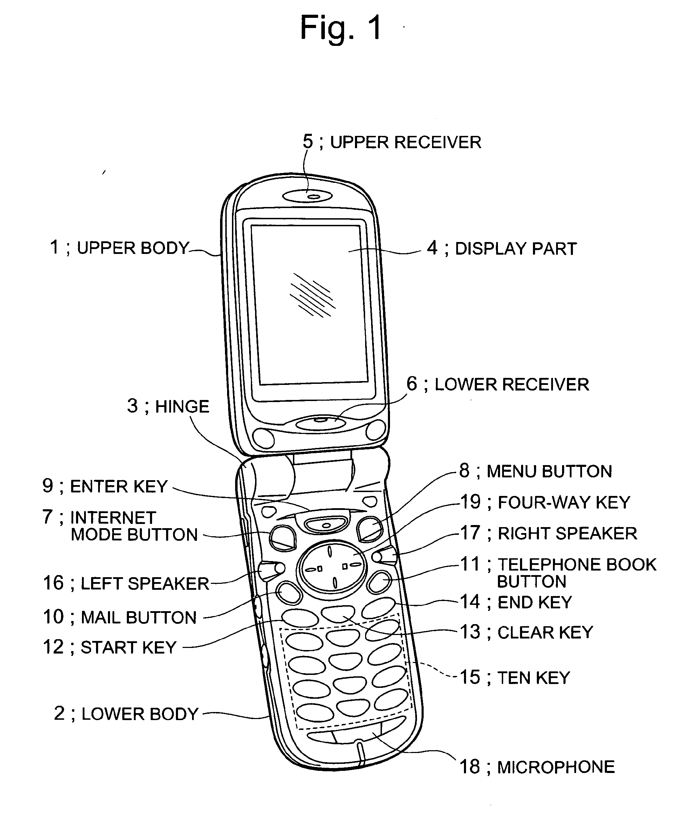

Figs. 1 to 4 illustrates only portions which are necessary for explaining the exemplary embodiment.

As shown in Fig. 1, the portable terminal of this exemplary embodiment comprises an upper body 1, a lower body 2, and a hinge 3. The upper body 1 and the lower body 2 are pivotally and electrically coupled by the hinge 3 . The upper body 1 and the lower body 2 are folded by pivoting on hinge 3 such that a front surface of the upper body 1 and a front surface for the lower body 2 face each other. In addition, the portable terminal receives wireless signal from a networks.

Front surface of the upper body 1 comprises a black-and-white or color display part 4, and upper and lower receivers 5 and 6. The display 4 has a liquid crystal panel or organic EL (Electronic Luminescence) panel for displaying various kinds of information. The upper and lower receivers 5 and 6 output sounds received via the wireless signal.

Front surface of the lower body 2 comprises an Internet mode button 7 for selecting an operating state in an Internet mode, a menu button 8 for displaying and selecting functions or operation modes, an enter key 9 for confirming a selected function or operation modes, a mail button 10 for selecting a mail creation mode and so on, a telephone book button 11 for displaying registered telephone numbers, a start key 12 for starting a designated operating state, a clear key 13 for aborting a designated operating state, an end key 14 for terminating transmission and reception of signals via the wireless signals, a ten key 15 composed of numbers 0 to 9 and symbols # and * for inputting telephone numbers and characters for composing mails, a left speaker 16 and a right speaker 17 for outputting reproduced music, a microphone 18 for inputting sounds, a four-way key 19 for scrolling options on the display 4 and performing operations of games on the display 4.

The left speaker 16 and the right speaker 17 are separately disposed on a right and a left side on a surface of the lower body 2. The four-way key 19 is interposed between the speakers 16 and 17.

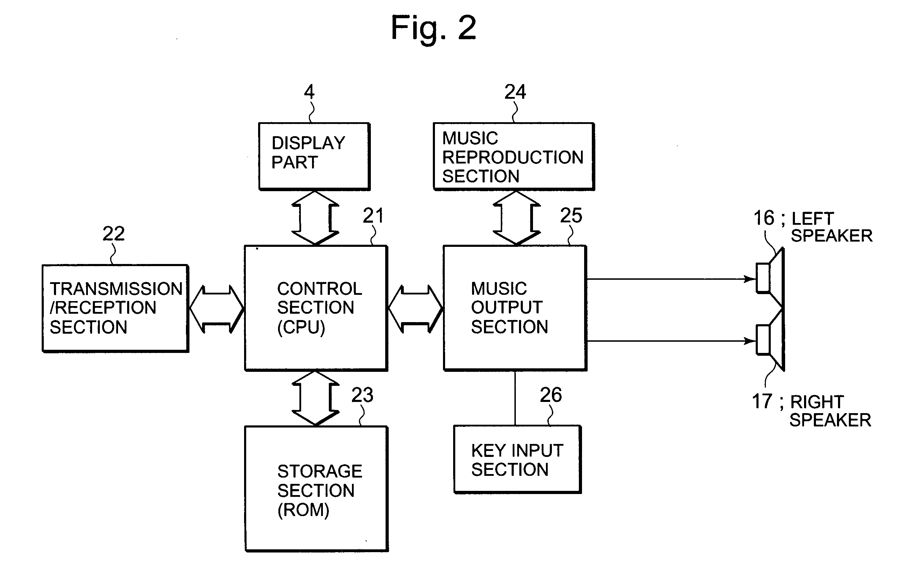

As shown in Fig. 2, in the portable terminal of this exemplary embodiment, the electrical configuration of the main part comprises the display part 4, the left speaker 16, the right speaker 17, a control section 21, a transmission/reception section 22, a storage section 23, a music reproduction section 24, a music output section 25, and a key input section 26. The display part 4, the left speaker 16, and the right speaker 17 are the same as those described in Fig. 1.

The control section 21 comprises a CPU (Central Processing Unit), controls the overall operations of the portable terminal. The control section 21 converts a sound signal received from the microphone 18 into digital transmission data and supplies the digital transmission data to the transmission/reception section 22. In addition, the control section 21 receives digital reception data from the transmission/reception section 22, converts the digital reception data into an analog signal and supplies the analog signal to the receivers 5 and 6. Furthermore the control section 21 retrieves data stored in the storage section 23 and outputs the retrieved data to the music output section 25.

The transmission/reception section 22 converts, the digital transmission data received from the control section 21 into a radio signal, , and supplies the radio signal to an antenna (not shown). In addition, The transmission /reception section 22 converts a radio signal received from the antenna (not shown) into the reception digital data, and outputs the reception digital data to the control section 21.

The storage section 23 is comprises a ROM (Read Only Memory) and stores data such as music.

The music reproduction section 24 converts the data inputted from the control section 21 through the music output section 25 into music data and outputs, to the music output section 25, the converted sound data such as, stereophonic sound data, and surround sound data. The music output section 25 drives the left speaker 16 and the right speaker 17 according to the sound data received from the music reproduction section 24 or surround sound data. The surround data may be generated from the stereophonic data.

In response to a key operation on the body surface, the key input section 26 generates and outputs a signal for controlling the operations of the music output section 25.

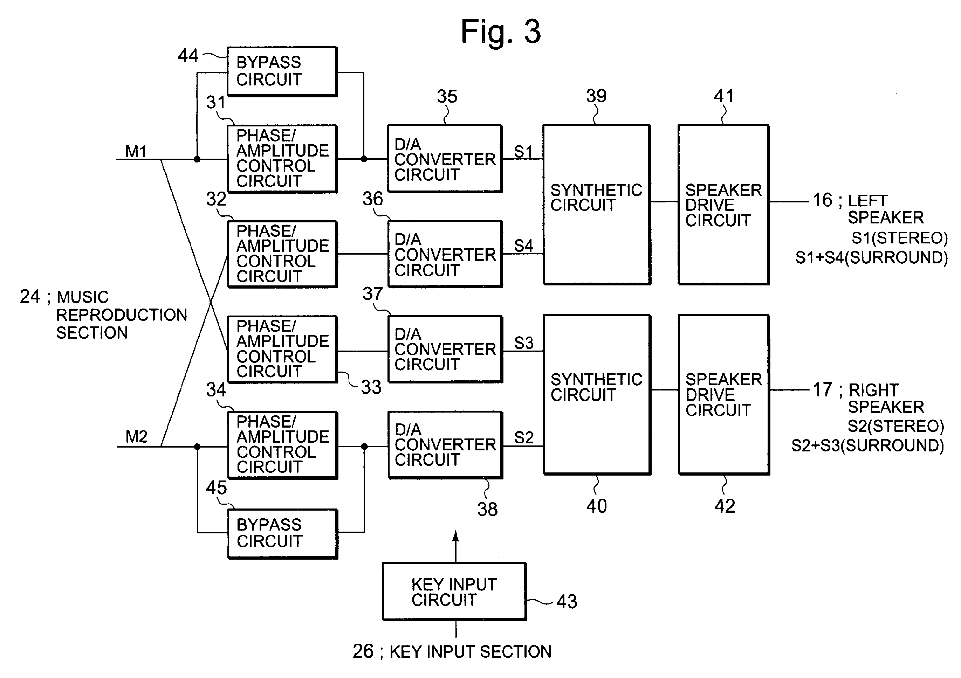

As shown in Fig. 3, the music output section 25 of this embodiment comprises the left speaker 16, the right speaker 17, phase/amplitude control circuits 31 to 34, digital/analog (D/A) converter circuits 35 to 38, synthetic circuits 39 and 40, speaker drive circuits 41 and 42, a key input circuit 43, and bypass circuits 44 and 45. The speakers 16 and 17 are the same as those described in Fig. 2.

Upon receiving the stereophonic sound data M1 from the music reproduction section 24, the phase/amplitude control circuits 31 and 33 adjust the phase and amplitude of the stereophonic sound data and output the adjusted stereophonic sound data to the respective D/A converters 35 and 37. Upon receiving the other stereophonic sound data M2 from the music reproduction section 24, the phase/amplitude control circuits 32 and 34 adjust the phase and amplitude of the stereophonic sound data and output the adjusted data to the respective D/A converters 35 and 37. The D/A converter circuits 35 to 38 convert digital sound signals (adjusted sound data) received from the phase/amplitude control circuits 31 to 34 into analog sound signals, respectively, and output the analog signals S1 to S4 to the respective synthetic circuits 39 and 40.

The synthetic circuit 39 synthesizes the analog signals S1 and S4 from the respective D/A converter 35 and 36 and outputs the synthesized signal to the speaker drive circuit 41. The synthetic circuit 40 synthesizes the analog signals S3 and S2 from the respective D/A converter 37 and 38 and outputs the synthesized signal to the speaker driver circuit 42. The speaker drive circuits 41 and 42 amplify the synthesized signals from the synthetic respective circuits 39 and 40, and supply the amplified signals to the left speaker 16 and the right speaker 17, respectively. In response to an input from the key input section 26, the key input circuit 43 generates and output a signal for controlling the operating states of the phase/amplitude control circuits 31 to 34 and the bypass circuits 44 and 45. The bypass circuits 44 and 45 get stereophonic sound data M1 and M2 go directly into the respective D/A converter 35 and 38 without going though the respective phase/amplitude control circuit if controlled to do so.

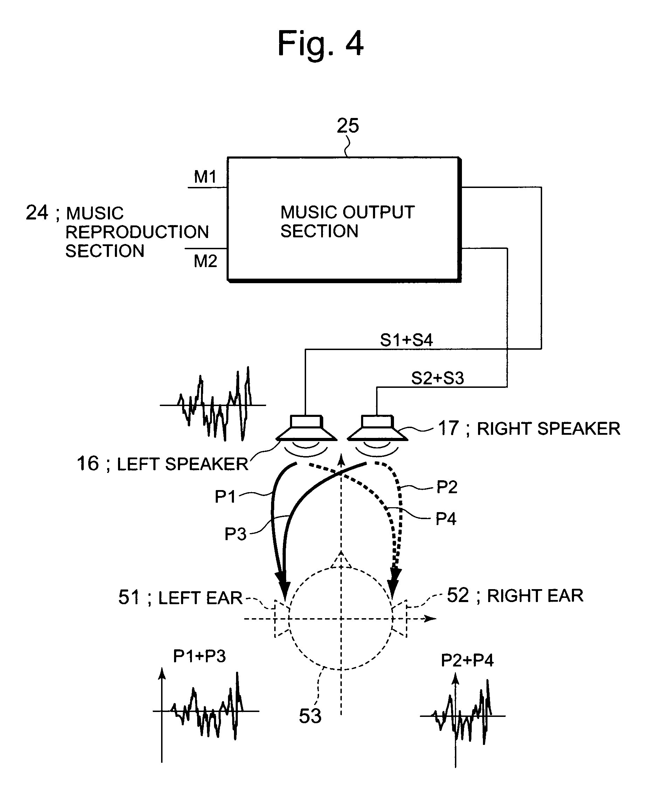

Fig. 4 explains an operation of generating the stereophonic sounds and the surround sounds in the portable terminal of this exemplary embodiment. Referring to Figs. 1 to 4, the process of generating stereophonic sounds will be first discussed below.

In the portable terminal of this exemplary embodiment, when music or sounds including call reception melodies and melodies for sound effects in games are to be generated as stereophonic sounds, for example, a user of the portable terminal presses the menu button 8 on the front of the body and selects various operation modes displayed on a display screen of the display part 4. In addition, the user selects a stereophonic sound mode from the modes displayed on the display screen by manipulating the four-way key 19 and confirms the selection by pressing the enter key 9. The key input section 26 receives the selection and controls the key input circuit 43, so that the key input circuit 43 generates and outputs a signal to disable an operations of the phase/amplitude control circuits 31 to 34 and to enable an operations of the bypass circuits 44 and 45. That is, the key input circuit 43 makes stereophonic sound data M1 and M2 go directly into the respective D/A converter 35 and 38 without going though the respective phase/amplitude control circuit.

Furthermore, for example, upon receiving specific music data from the storage section 23 according to a detection of a call reception and a progress of a game, the control section 21 outputs the music data to the music reproduction section 24 via the music output section 25. The music reproduction section 24 generates the stereophonic sound data M1 and M2 according to the music data received from the music output section 21 and returns the stereophonic sound data M1 and M2 to the music output section 25.

In the music output section 25, the stereophonic sound data M1 and M2 are input to the D/A converter circuits 35 and 38 via the bypass circuits 44 and 45, respectively. Accordingly the D/A converter circuit 35 and 38 outputs the respective analog sound signals S1 and S2 to the respective synthetic circuits 39 and 40.

The synthetic circuit 39 amplifies the analog sound signal S1 and outputs the amplified signal S1 to the speaker drive circuit 41. The synthetic circuit 40 amplifies the analog sound signal S2 and outputs the amplified signal S2 to the speaker drive circuit 42. The speaker drive circuits 41 and 42 receives the amplified signals S1 and S2 from the respective synthetic circuits 39 and 40 and outputs the signals received from the synthetic circuits 39 and 40 to the left speaker 16 and the right speaker 17, respectively. Thus, the left speaker and right speaker outputs respective sounds P1 and P2 based on the signals S1 and S2 from the respective synthetic circuits 41 and 42. The sounds P1 and P2 propagates to a left ear 51 and a right ear 52 of the user 53 of the portable terminal, respectively, so that the user 53 can recognize sounds from the portable terminal as sounds with a stereophonic effect.

Next, referring to Figs. 1 to 4, the operation of generating surround sound will be discussed below.

In the portable terminal of this exemplary embodiment, when music or sounds including call reception melodies and melodies for sound effects in games is to be generated by surround sound, a user of the portable terminal presses the menu button 8 on the front of the body and the various operation modes are displayed on a display screen of the display part 4. In addition, the user selects a surround sound mode from the modes displayed on the display screen by manipulating the four-way key 19 and confirms the selection by pressing the enter key 9. The key input section 26 receives the selection and controls the key input circuit 43, so that the key input circuit 43 generates and outputs a signal to enable an operations of the phase/amplitude control circuits 31 to 34 and to disable an operations of the bypass circuits 44 and 45.

Furthermore, for example, upon receiving specific music data from the storage section 23 according to a detection of a call reception and a progress of a game, the control section 21 outputs the music data to the music reproduction section 24 via the music output section 25. As described with respect to the process generating the stereo sound, the music reproduction section 24 generates the stereophonic sound data M1 and M2 according to the music data received from the music output section 21 and returns the stereophonic sound data M1 and M2 to the music output section 25.

In the music output section 25, the stereophonic sound data M1 is input to the phase/amplitude control circuits 31 and 33. Similarly, the stereophonic sound data M2 is input to the phase/amplitude control circuits 32 and 34. The phase/amplitude control circuits 31 and 33 adjust phases and amplitudes of the stereophonic sound data M1 and output the adjusted data to respective the D/A converters 35 and 37. Similarly, the phase/amplitude control circuits 32 and 34 adjust phases and amplitudes of the stereophonic sound data M2 and output the adjusted data to the respective D/A converters 36 and 38. The D/A converter circuits 35 and 36 convert the adjusted digital data received from the phase/amplitude control circuits 31 and 32 into analog sound signals S1 and S4, respectively, and outputs the respective analog sound signals S1 and S4 to the synthetic circuit 39. Similarly, the D/A converter circuits 37 and 38 convert the adjusted digital data received from the phase/amplitude control circuits 33 and 34 into analog sound signals S3 and S2, respectively, and outputs the respective analog sound signals S3 and S2 to the synthetic circuit 40.

The music reproduction section 24 may generate surrounding sounds data comprising three or more different data. In this case, the music output section 25 outputs the three or more data to the phase/amplitude control circuits 31 to 34. The phase/amplitude control circuits 31 to 34 adjust phases and amplitudes of the respective sound data received from the music output section 25 and output the adjusted data to the respective D/A converters 35 to 38. The D/A converter circuits 35 to 38 convert the respective adjusted digital data received from the phase/amplitude control circuits 31 to 34 into analog sound signals, and outputs the analog sound signals to the respective synthetic circuits 39 and 40.

The synthetic circuit 39 synthesizes the analog sound signal S1 and S4 received from the respective D/A converter circuits 35 and 36 and output the synthesized signal (S1 + S4) to the speaker drive circuit 41. The speaker drive circuit 41 amplifies the synthesized (S1 + S4) and outputs the amplified signal (S1 + S4) to the left speaker 16. Accordingly the left speaker 16 outputs a sound P1 based on the analog sound signal S1 and outputs a sound P4 based on the analog sound signal S4.

The synthetic circuit 40 synthesizes the analog sound signal S3 and S2 received from the respective D/A converter circuits 37 and 38 and outputs the synthesized signal (S2 + S3) to the speaker drive circuit 41. The speaker drive circuit 42 amplifies the synthesized (S2 + S3) and outputs the amplified signal (S2 + S3) to the right speaker 17. Accordingly the right speaker 17 outputs a sound P2 based on the analog sound signals S2 and outputs a sound P3 based on the analog sound signal S3. Hence, the sound P1 from the left speaker 16 and the sound P3 from the right speaker 17 are spatially synthesized and propagated to the left ear 51 of the user 53, and the sound P4 from the left speaker 16 and the sound P2 from the right speaker 17 are spatially synthesized and propagated to the right ear 52 of the user 53. Accordingly, the user 53 can recognize sounds from the potable terminal with a surround effect

As shown in Fig. 4, sounds from the left speaker 16 and the right speaker 17 propagate through a space and reach the ears of the user 53. As is schematically shown in Fig. 4, since the sounds from the speakers 16 and 17 reach the left ear 51 and the right ear 52 of the user 53 through different paths than each other, the user 53 hears a sound with a surround effect due to a difference in phase and amplitude among the sounds P1 to P4.

When the speakers 16 and 17 are close to each other and the phase difference and the amplitude difference among the sounds P1 to P4 are small, the user 53 recognizes a small surround or stereophonic effect. However, according to the technique disclosed above, at least one key, such as the four-way key for manipulating the portable terminal is positioned between the speakers 16 and 17 providing a shield, such as a finger of the user 53, between the speakers 16 and 17. Hence, the phase difference and the amplitude difference among the sounds P1 to P4 can be enlarged, thereby enhancing the surround effect recognized by the user 53.

In addition, according to the portable terminal of this exemplary embodiment, both sounds with stereophonic effects and sound with surround effects can be selectively heard by using music or sound data stored in the storage section 23, even if the stored data is monophonic music or sound data.

As described above, in the portable terminal of this exemplary embodiment, the left speaker 16 and the right speaker 17 are separately disposed on a left side and a right side on a surface of a body panel, and the four-way key 19 is interposed between the speakers. Thus, when the user operates the four-way key 19 while watching the display part 4 and using the portable terminal, the user's finger on the four-way key 19 can be a shield which increases the isolation between the speakers 16 and 17, so that a phase difference and an amplitude difference can become definite between the sounds P1 and P3 to the left ear 51 and a phase difference and an amplitude difference can become definite between the sounds P2 and P4 to the right ear 52. Accordingly, it is possible to achieve an enhanced stereophonic effect or an enhanced surround effect.

The above explanation specifically described the exemplary embodiment of the technique in accordance with the drawings. A configuration of the portable terminal is not limited to this exemplary embodiment.

For example, the exemplary embodiment described a foldable mobile phone as an example of the portable terminal. However, any portable device can be used regardless of its shape and structure as long as an object or a portion to be a shield, such as key manipulated by a user of the terminal device, is interposed between the speakers.

In addition, it is preferable to dispose a display part and a portion or an object where the user is likely to place his finger on the same surface of a body of the device. Further, according to the exemplary embodiment, the four-way key on which the user is likely to place a finger when using the portable terminal is disposed as a portion or an object to be a shield between the left speaker and the right speaker. However, the portion or the object to be a shield can be other keys than the four-way key, and can be a structure other than key.

Moreover, the number of speakers is not limited to two. Any number of speakers may be divided into a plurality of groups and disposed on a portable device according to the technique disclosed. Also, the number of synthetic circuit and the number of the speaker driver may be three or more according to the number of the speakers.. In addition, the number of the plurality of groups of speaker is not limited to two.

Furthermore, the number of phase/amplitude control circuits may be five or more. Also, the number of the D/A converter circuit may be five or more according to the number of the phase/amplitude control circuits.

In addition, the technique disclosed is applicable not only to existing portable devices such as a mobile phone, a PHS, and a PDA but also to various kinds of upcoming compact portable equipment having the function of reproducing music.

While the technique has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the following claims.

## Claims

1. A portable device comprising:
a body;
a plurality of speakers operable to output a stereophonic sound or a surround sound, the plurality of speakers being separated into at least two groups of speaker, the at least two groups of speaker being positioned apart from each other; and
an object which is positioned between the at least two groups of speaker.

2. A portable device according to claim 2, wherein the body comprises a first face and a second face, and the at least two groups of speakers and the object are positioned on the first face.

3. A portable device according to claim 2, wherein the object is a key operable to manipulate the portable device.

4. A portable device according to claim 2, further comprising
a receiver, positioned on the first face, the receiver operable to output a received sound, the received sound being received via wireless signals by the portable device.

5. A portable device according to claim 4, further comprising
a secondary receiver, positioned on the first face, the secondary receiver being operable to output the received sound.

6. A portable device according to claim 2, further comprising
a display positioned on the first face.

7. A portable device according to claim 2, further comprising
a plurality of keys, disposed on the first face, the plurality of keys being operable to input characters to the portable device.

8. A portable device according to claim 2, further comprising
a microphone positioned on the first face.

9. A portable device according to claim 2, wherein
the body further includes a first body and a second body, and the first body and second body are pivotally coupled using a hinge.

10. A portable device according to claim 2, wherein
the object is positioned at a location in the body where a user of the portable device is likely to place a part of a body of the user.

11. A portable device according to claim 10, wherein the part of the body is a finger of the user.

12. A method of providing a stereophonic or surround sound from a portable device:
generating signals corresponding to a first analog sound in a first speaker;
generating signals corresponding to a second analog sound in a second speaker;
placing a body part of a user on an object positioned between the first speaker and the second speaker;
providing the first analog sound to the left ear of the user; and
providing the second analog sound to the right ear of the user.
